(19) Europäisches Patentamt / European Patent Office / Office européen des brevets

(11) **EP 3 858 559 B1**

(12) **EUROPÄISCHE PATENTSCHRIFT**

(45) Veröffentlichungstag und Bekanntmachung des Hinweises auf die Patenterteilung:
**03.08.2022   Patentblatt 2022/31**

(21) Anmeldenummer: **20201481.7**

(22) Anmeldetag: **13.10.2020**

(51) Internationale Patentklassifikation (IPC):
**B25J 17/02** (2006.01)     **F16M 11/18** (2006.01)
**B64D 47/00** (2006.01)     **B64D 47/08** (2006.01)
**B25J 9/00** (2006.01)      **B64G 1/22** (2006.01)
**B64G 1/64** (2006.01)      **G02B 7/183** (2021.01)
**B64C 39/02** (2006.01)

(52) Gemeinsame Patentklassifikation (CPC):
**B64D 47/08; B25J 9/0045; F16M 11/123;
F16M 11/14; F16M 11/18; G02B 7/1821;**
B64C 2201/127

(54) **RICHTPLATTFORM, SENSORSYSTEM, LUFTFAHRZEUG UND VERFAHREN ZUM BETREIBEN EINER RICHTPLATTFORM**

ALIGNMENT PLATFORM, SENSOR SYSTEM, AIRCRAFT AND METHOD FOR OPERATING AN ALIGNMENT PLATFORM

PLATEFORME DE DRESSAGE, SYSTÈME DE CAPTEURS, AVION ET PROCÉDÉ DE FONCTIONNEMENT D'UNE PLATEFORME DE DRESSAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.01.2020   DE 102020000669**

(43) Veröffentlichungstag der Anmeldung:
**04.08.2021   Patentblatt 2021/31**

(73) Patentinhaber: **MBDA Deutschland GmbH
86529 Schrobenhausen (DE)**

(72) Erfinder:
• **KLAFFERT, Thomas
85356 Freising (DE)**
• **BRÄNDLE, Markus
85290 Geisenfeld (DE)**

(74) Vertreter: **Isarpatent
Patent- und Rechtsanwälte Barth
Charles Hassa Peckmann & Partner mbB
Friedrichstrasse 31
80801 München (DE)**

(56) Entgegenhaltungen:
EP-A1- 1 188 668     DE-A1- 10 019 162
US-A- 5 740 699      US-A1- 2006 241 810

EP 3 858 559 B1

**Beschreibung**

Die vorliegende Erfindung betrifft eine Richtplattform, insbesondere für eine Sensoreinrichtung, ein Sensorsystem mit einer solchen Richtplattform und ein Luftfahrzeug, welches ein Sensorsystem aufweist. Ferner betrifft die Erfindung ein Verfahren zum Betreiben einer Richtplattform.

Optische Sensoren, Radarsensoren oder andere derartige Überwachungssensoren oder Spiegel von Sensoranordnungen werden häufig an schwenkbaren Richtplattformen untergebracht. Beispielsweise kann es in Luftfahrzeugen, insbesondere in unbemannten Luftfahrzeugen wie Drohnen, Lenkflugkörpern oder dergleichen notwendig sein, eine Sensoreinrichtung um zumindest zwei Achsen schwenkbar zu lagern, um eine hinreichend große räumliche Abdeckung in Kombination mit einer hohen Bildauflösung zu realisieren. Bei derartigen Sensoren ist der Öffnungswinkel eines Sehfelds des Sensors typischerweise abhängig von Sensorauflösung. Um eine Abdeckung größerer räumlicher Winkelbereiche zu realisieren, besteht ein Bedarf nach einer möglichst schnellen und effektiven Scanbewegung. Ferner ist die Leistungsfähigkeit des Sensors oder Spiegels oftmals abhängig von dessen Größe. Es ist daher wünschenswert, dem Sensor oder Spiegel möglichst viel Platz innerhalb des verfügbaren Bauraums zur Verfügung zu stellen und eine Abschattung des Spiegels oder Sensors infolge der Schwenkbewegung zu verringern oder möglichst zu vermeiden.

In der US 8 215 199 B2 wird eine Richtplattform für Sensoren beschrieben, welche eine Basisplattform, eine bewegbare obere Plattform und zumindest drei Aktuatoreinrichtungen aufweist, wobei die Aktuatoreinrichtungen sich zwischen den Plattformen erstrecken und als längenveränderliche Linearaktuatoren ausgebildet sind, um die relative Lage der oberen Plattform relativ zu der Basisplattform zu verändern. Die Dokumente US2006/241810, EP188668, US5740699, DE10019162 beschreiben weitere Ausrichtungsvorrichtungen.

Neben Sensoreinrichtungen können Richtplattformen, wie sie oben beschrieben wurden, auch für andere Anwendungen eingesetzt werden, z.B. zum Ausrichten bzw. Bewegen von Werkzeugen, Beleuchtungseinrichtungen oder dergleichen.

Es ist Aufgabe der vorliegenden Erfindung, verbesserte Lösungen für Richtplattformen bereitzustellen.

Diese Aufgabe wird jeweils durch die Gegenstände der unabhängigen Ansprüche gelöst.

Gemäß einem ersten Aspekt der Erfindung ist eine Richtplattform, insbesondere für eine Sensoreinrichtung, vorgesehen. Die Richtplattform umfasst eine erste Plattform mit einer ersten Lagerstelle eines ersten Zweiachsgelenks, einer ersten Lagerstelle eines zweiten Zweiachsgelenks und einer ersten Lagerstelle eines dritten Zweiachsgelenk, wobei die Zweiachsgelenke jeweils zwei Rotationsfreiheitsgrade aufweisen oder definieren, und wobei die ersten Lagerstellen zu einem ersten Dreieck angeordnet sind, und eine zweite Plattform mit einer zweiten Lagerstelle eines ersten Dreiachsgelenks, einer zweiten Lagerstelle eines zweiten Dreiachsgelenks und einer zweiten Lagerstelle eines dritten Dreiachsgelenks, wobei die Dreiachsgelenke jeweils drei Rotationsfreiheitsgrade aufweisen oder definieren, und wobei die zweiten Lagerstellen zu einem zweiten Dreieck angeordnet sind. Gemäß einer ersten Alternative ist die erste Plattform als Basis und die zweite Plattform als Trägerplattform zum Halten der Sensoreinrichtung oder einer zu bewegenden Komponente ausgebildet. Gemäß einer zweiten Alternative ist die zweite Plattform als Basis und die erste Plattform als Trägerplattform zum Halten der Sensoreinrichtung oder einer zu bewegenden Komponente ausgebildet. Die Basis kann beispielsweise als Platte, Rahmen oder allgemein als ein Gestell realisiert sein, an welchem zumindest drei voneinander beabstandete, in einer Ebene liegende erste Lagerstellen vorgesehen sind, an welchen die jeweiligen Zwei- oder Dreiachsgelenke ganz oder teilweise angeordnet bzw. angebracht sind. Die Trägerplattform kann insbesondere als Platte, Rahmen oder allgemein als ein Gestell realisiert sein und dient zur Aufnahme bzw. Halterung einer Sensoreinrichtung, insbesondere an einer der Basis abgewandt gelegenen Seite. An der Trägerplattform sind zumindest drei voneinander beabstandete, in einer Ebene liegende zweite Lagerstellen vorgesehen, an welchen die jeweiligen Zwei- oder Dreiachsgelenke ganz oder teilweise angeordnet bzw. angebracht sind. Die Zweiachsgelenke definieren eine erste Achse oder Antriebsachse und eine zweite Achse oder Innenachse, welche senkrecht auf die Antriebsachse steht. Die Dreiachsgelenke definieren drei aufeinander senkrecht stehende Drehachsen.

Die erfindungsgemäße Richtplattform umfasst ferner ein jeweils an dem ersten Zweiachsgelenk und dem ersten Dreiachsgelenk gelagertes erstes Verbindungsglied, welches sich mit einer fixen Länge zwischen der ersten Lagerstelle des ersten Zweiachsgelenks und der zweiten Lagerstelle des ersten Dreiachsgelenks erstreckt, ein jeweils an dem zweiten Zweiachsgelenk und dem zweiten Dreiachsgelenk gelagertes zweites Verbindungsglied, welches sich mit einer fixen Länge zwischen der ersten Lagerstelle des zweiten Zweiachsgelenks und der zweiten Lagerstelle des zweiten Dreiachsgelenks erstreckt, und ein jeweils an dem dritten Zweiachsgelenk und dem dritten Dreiachsgelenk gelagertes drittes Verbindungsglied, welches sich mit einer fixen Länge zwischen der ersten Lagerstelle des dritten Zweiachsgelenks und der zweiten Lagerstelle des dritten Dreiachsgelenks erstreckt. Die Verbindungsglieder weisen jeweils eine feste Länge auf bzw. sind längenunveränderlich ausgebildet. Beispielsweise können die Verbindungsglieder als Stäbe, Säulen oder allgemein als längenunveränderliche Stützen oder Träger ausgebildet sein. Die Verbindungsglieder sind jeweils an einem Zweiachsgelenk der ersten Plattform und einem Dreiachsgelenk der zweiten Plattform gelagert. Allgemein erstreckt sich ein jeweiliges Verbindungsglied zwischen jeweils einer ersten Lagerstelle der Basis und einer zweiten Lagerstelle der Trägerplattform. An der ersten Plattform sind erste Lagerstellen der Zweiachsgelenke und an der zweiten Plattform sind zweite Lagerstellen der Dreiachsgelenke vorgesehen. Jedoch sind die zwei Freiheitsgrade der Zweiachsgelenke und die drei Freiheitsgrade der Dreiachsgelenke jeweils nicht zwangsläufig vollständig an der jeweiligen Lagerstelle in einer einzigen strukturellen Einheit realisiert. Beispielsweise kann ein erstes Ende des jeweiligen Verbindungsglieds nur um eine Achse drehbar an der entsprechenden ersten Lagerstelle der ersten Plattform gelagert sein, während eine senkrecht auf diese Achse stehende zweite Achse durch eine Gelenkstruktur des Verbindungsglieds definiert ist, so dass ein Zweiachsgelenk gebildet wird. In ähnlicher Weise kann im Falle eines Dreiachsgelenks das Verbindungsglied an der entsprechenden zweiten Lagerstelle der zweiten Plattform um zwei aufeinander senkrecht stehende Drehachsen drehbar gelagert sein, während eine auf diese beiden Drehachsen senkrechte dritte Drehachse durch eine Gelenkstruktur des Verbindungsglieds definiert ist, so dass ein Dreiachsgelenk gebildet wird. Selbstverständlich können jedoch an den ersten Lagerstellen jeweils zwei Freiheitsgrade definierende Gelenke vorgesehen sein, an denen die Verbindungsglieder mit einem ersten Ende um zwei aufeinander senkrecht stehende Achsen drehbar gelagert sind. Ähnlich können an den zweiten Lagerstellen jeweils drei Freiheitsgrade definierende Gelenke vorgesehen sein, an denen die Verbindungsglieder mit einem zweiten Ende um drei aufeinander senkrecht stehende Achsen drehbar gelagert sind.

Die Richtplattform weist ferner eine erste Antriebseinrichtung, eine zweite Antriebseinrichtung und eine dritte Antriebseinrichtung auf, wobei jeweils eine Antriebseinrichtung an jeweils ein Zweiachsgelenk gekoppelt ist, um das an dem jeweiligen Zweiachsgelenk gelagerte Verbindungsglied um eine Antriebsdrehachse des Zweiachsgelenks zu drehen. Beispielsweise kann die erste Antriebseinrichtung an das erste Zweiachsgelenk, die zweite Antriebseinrichtung an die zweite Antriebseinrichtung und die dritte Antriebseinrichtung an das dritte Zweiachsgelenk gekoppelt sein. Demnach sind die Antriebseinrichtungen, welche z.B. in Form von Elektromotoren, hydraulischen Aktuatoren oder dergleichen realisiert sein können, jeweils kinematisch an die Antriebsdrehachse eines jeweiligen Zweiachsgelenks gekoppelt, so dass das an diesem Zweiachsgelenk gelagerte Verbindungsglied durch die jeweilige Antriebseinrichtung um die Antriebsachse verschwenkbar ist. Somit wird eine Parallelkinematik realisiert.

Gemäß einem zweiten Aspekt der Erfindung ist ein Sensorsystem, insbesondere für ein Luftfahrzeug, vorgesehen, wobei das Sensorsystem eine Richtplattform nach dem ersten Aspekt der Erfindung und eine Sensoreinrichtung aufweist, welche an der Trägerplattform angeordnet ist. Die Sensoreinrichtung kann insbesondere eine Radarsensoreinrichtung, ein optischer Sensor, ein Spiegel oder dergleichen sein. Beispielsweise kann die Richtplattform in einen Suchkopf eines unbemannten Flugkörpers oder allgemein in einen unbemannten Flugkörper integriert sein.

Gemäß einem dritten Aspekt der Erfindung ist ein Luftfahrzeug, beispielsweise unbemannter Flugkörper, mit einem Sensorsystem nach dem zweiten Aspekt der Erfindung vorgesehen.

Gemäß einem vierten Aspekt der Erfindung ist ein Verfahren zum Betreiben einer Richtplattform nach dem ersten Aspekt der Erfindung vorgesehen. Das Verfahren umfasst ein Verschwenken der Verbindungsglieder mittels der Antriebseinrichtungen um die jeweilige Antriebsdrehachse relativ zu einer Neutralposition. In der Neutralposition sind ein erster Umkreis des ersten Dreiecks und ein zweiter Umkreis des zweiten Dreiecks konzentrisch zueinander angeordnet und die ersten Lagerstellen der Zweiachsgelenke und die zweiten Lagerstellen Dreiachsgelenke sind in Bezug auf eine Rollachse um einen Neutral-Rollwinkel relativ zueinander beabstandet, wobei die Rollachse senkrecht auf eine durch die zweiten Lagerstellen definierte Ebene steht und durch einen Mittelpunkt des zweiten Umkreises verläuft. Insbesondere sind in der Neutralposition der Mittelpunkt des zweiten Umkreises und ein Mittelpunkt des ersten Umkreises beide auf einer Zentralachse gelegen, welche senkrecht auf eine durch die ersten Lagerstellen definierte Ebene steht und durch den Mittelpunkt des ersten Umkreises verläuft. Das Verschwenken der Verbindungsglieder umfasst ein einzelnes bzw. unabhängiges Betreiben der Antriebseinrichtungen jeweils derart, dass durch das Verschwenken der Verbindungsglieder um die jeweilige Antriebsdrehachse die zweite Plattform relativ zu einer in Bezug auf die erste Plattform ortsfesten Zentralachse um einen Neigungswinkel verkippt und um die Rollachse gedreht wird.

Eine der Erfindung zugrundeliegende Idee besteht darin, eine Richtplattform als eine Parallelkinematik zu realisieren, wobei eine erste Plattform und eine zweite Plattform durch drei Verbindungslieder miteinander verbunden sind und jedes dieser Verbindungsglieder an einem zwei rotatorische Freiheitsgrade definierenden Zweiachslager an der ersten Plattform und an einem drei rotatorische Freiheitsgrade definierenden Dreiachslager gelagert ist. Die Lagerstellen, an denen die Verbindungsglieder an der ersten Plattform gelagert sind, sind als Dreieck an der ersten Plattform angeordnet und definieren damit eine erste Ebene und die Lagerstellen, an denen die Verbindungsglieder an der zweiten Plattform gelagert sind, sind jeweils als Dreieck an der zweiten Plattform angeordnet und definieren damit eine zweite Ebene. Durch Drehen einer in der ersten Ebene gelegenen Antriebsdrehachse der Zweiachslager mittels der Antriebseinrichtungen sind die Verbindungsglieder um diese Antriebdrehachsen verschwenkbar. Damit wird eine kinematische Struktur bereitgestellt, für die sich nach der Formel von Grübler und Tschebyscheff ein Bewegungsfreiheitsgrad FG = 3 ergibt:

$$FG = 6 \cdot (n-1) - 6 \cdot g + \sum f_i - F_{id}$$

wobei "n" der Anzahl der Getriebeglieder, "g" der Anzahl der Gelenke, "$f_i$" der Freiheitsgrad des jeweiligen Gelenks i und "$F_{id}$" die identischen Freiheitsgrade sind. n ist vorliegend 5 (3 Verbindungsglieder plus erste Plattform plus zweite Plattform), g ist vorliegend 6 (3 Zweiachsgelenke plus 3 Dreiachsgelenke), $\Sigma f_i$ ergibt sich zu 15 (3 mal 2 für die Zweiachsgelenke und 3 mal 3 für die Dreiachsgelenke) und $F_{id}$ ist 0. Dadurch werden in diesem Falle drei rotatorische Freiheitsgrade erzielt, sodass die zweite Plattform relativ zu der ersten Plattform nach allen Seiten eine Kippbewegung sowie um ihre Flächennormale bzw. Rollachse eine Rollbewegung ausführen kann. Folglich weist die erfindungsgemäße Richtplattform abtriebsseitig ausschließlich rotatorische Freiheitsgrade auf. Insbesondere sind die erste Plattform und die zweite Plattform ausschließlich aufgrund von Rotationsbewegungen der Verbindungsglieder relativ zueinander bewegbar, wobei die Rotationsbewegungen der Verbindungsglieder durch die Zweiachsgelenke und die Dreiachsgelenke geführt sind. Die Zweiachsgelenke und die Dreiachsgelenke weisen insbesondere ausschließlich rotatorische Freiheitsgrade auf.

Erfindungsgemäß wird somit mit einer minimalen Anzahl an Komponenten Richtplattform realisiert, mit der eine Trägerplattform eine kipp- und rollbar ist. Durch die Kombination einer Kipp- und Rollbewegung können auf engstem Raum hohe Neigungswinkel der Trägerplattform relativ zu der Basis erzielt werden. Ein weiterer Vorteil liegt darin, dass die Kombination von Kippen und Rollen kinematische Singularitäten gezielt umfahren werden können. Damit wird die Zuverlässigkeit der Richtplattform verbessert und gleichzeitig wird die Flexibilität bezüglich einstellbarer Kipp- bzw. Rollraten vergrößert. Ferner wird mit einer minimalen Anzahl an Komponenten eine Kinematik mit drei rotatorischen Freiheitsgraden geschaffen, so dass durch die Kombination von Kipp- und Rollbewegung Kollisionen mit umgebenden Strukturen leichter vermieden werden können.

Da im Verfahren zum Betreiben der Richtplattform vorgesehen ist, die zweite Plattform und die erste Plattform relativ zueinander aus einer Neutralposition heraus zu bewegen, in welcher die Plattformen zueinander leicht verrollt sind, wird der Schwenkraum vorteilhaft weiter verkleinert.

Da die Verbindungsglieder längenunveränderlich sind bzw. sich mit fixer Länge zwischen den Lagerstellen erstrecken, ist deren Massenverteilung entlang deren Länge relativ frei wählbar, wodurch die Steifigkeit und das Trägheitsverhalten der Richtplattform flexibel angepasst werden kann. Damit wird die konstruktive Freiheit zur Realisierung der Richtplattform vorteilhaft vergrößert, was die Anpassung an den zur Verfügung stehenden Bauraum erleichtert.

Vorteilhafte Ausgestaltungen und Weiterbildungen ergeben sich aus den auf die unabhängigen Ansprüche rückbezogenen Unteransprüchen in Verbindung mit der Beschreibung.

Gemäß manchen Ausführungsformen der Richtplattform kann vorgesehen sein, dass das erste Verbindungsglied, das zweite Verbindungsglied und das dritte Verbindungsglied jeweils die gleiche Länge aufweisen. Damit ergibt sich ein symmetrischer Aufbau, bei welchem die Zweiachsgelenke und die Dreiachsgelenke in der Neutralstellung in parallelen Ebenen angeordnet sind. Dies erleichtert die Steuerung der Bewegung der Plattformen und ist zudem vorteilhaft für die mechanische Steifigkeit und damit die Präzision der Richtplattform.

Gemäß weiteren Ausführungsformen kann vorgesehen sein, dass die ersten Lagerstellen der Zweiachsgelenke in Bezug auf einen Mittelpunkt eines ersten Umkreises des durch die Anordnung der ersten Lagerstellen definierten ersten Dreiecks um einen Winkel von größer oder gleich 90 Grad und kleiner als 180 Grad relativ zueinander beabstandet sind und/oder dass die zweiten Lagerstellen der Dreiachsgelenke in Bezug auf einen Mittelpunkt eines zweiten Umkreises des durch die Anordnung der zweiten Lagerstellen definierten zweiten Dreiecks um einen Winkel von größer oder gleich 90 Grad und kleiner als 180 Grad relativ zueinander beabstandet sind. Die ersten Lagerstellen der Zweiachsgelenke definieren ein erstes Dreieck und die zweiten Lagerstellen der Dreiachsgelenke definieren ein zweites Dreieck. Insbesondere definiert ein Schnittpunkt der Drehachsen des jeweiligen Gelenks jeweils eine Ecke des Dreiecks. Die Ecken des ersten Dreiecks liegen in einer ersten Ebene bzw. definieren diese und die Ecken des zweiten Dreiecks liegen in einer zweiten Ebene bzw. definieren diese. Zu dem ersten Dreieck kann ein erster Umkreis, auf welchem die Ecken des ersten Dreiecks liegen, gebildet werden. Zu dem zweiten Dreieck kann ein zweiter Umkreis, auf welchem die Ecken des zweiten Dreiecks liegen, gebildet werden. Gemäß machen Ausführungsformen können die Ecken der Dreiecke relativ zueinander um 90 Grad oder mehr in Bezug auf einen Mittelpunkt des jeweiligen Umkreises aber um weniger als 180 Grad zueinander beabstandet sein, wobei die Summe der Winkel 360 Grad ergibt. Dies erleichtert das Verschwenken der Verbindungsglieder mittels der Antriebseinrichtungen.

Optional kann vorgesehen, dass das erste Dreieck und/oder das zweite Dreieck gleichseitige Dreiecke sind. Hierbei sind die Ecken der Dreiecke bzw. die Gelenke in Bezug auf den Mittelpunkt des jeweiligen Umkreises um einen Winkel von 120 Grad beabstandet. Damit ergibt sich ein symmetrischer Aufbau, was sich vorteilhaft auf die Steifigkeit und die Trägheit der Richtplattform auswirkt.

Gemäß machen Ausführungsformen kann der zweite Umkreis einen kleineren Durchmesser aufweisen als der erste Umkreis. Dies ist insbesondere vorteilhaft, wenn die zweite Plattform die Trägerplattform bildet, da auf diese Weise einerseits die Masse der zweiten Plattform verringert wird und dadurch die Belastung der Verbindungsglieder und der Antriebseinrichtungen verkleinert wird. Außerdem wird dadurch der Platzbedarf der zweiten Plattform weiter verringert.

Gemäß machen Ausführungsformen kann vorgesehen sein, dass sich die Antriebsdrehachsen der Zweiachsgelenke tangential zu einem Umkreis des durch die Zweiachsgelenke definierten ersten Dreiecks erstrecken. Demnach können die Antriebsdrehachsen tangential zu dem ersten Umkreis, insbesondere in der ersten Ebene angeordnet sein. Dadurch wird ein noch kompakterer Aufbau der Richtplattform erzielt.

Gemäß machen Ausführungsformen können die Zweiachsgelenke als Kardangelenke ausgebildet sein. Kardangelenke weisen den Vorteil auf, dass sie robust und kostengünstig realisiert werden können. In diesem Fall sind beide Rotationsfreiheitsgrade des Zweiachsgelenks durch eine einzige, an der ersten Plattform angeordnete Gelenkstruktur realisiert.

Gemäß manchen Ausführungsformen können die Dreiachsgelenke als Kugelgelenke ausgebildet sein. Kugelgelenke weisen den Vorteil auf, dass sie robust und kostengünstig realisiert werden können. Ferner weisen sie vorteilhaft einen sehr kompakten Aufbau auf. In diesem Fall sind alle drei Rotationsfreiheitsgrade des Dreiachsgelenks durch eine einzige, an der zweiten Plattform angeordnete Gelenkstruktur realisiert.

Gemäß manchen Ausführungsformen kann vorgesehen sein, dass zumindest eines der Verbindungsglieder entgegen einer Drehung um eine senkrecht auf die Antriebsdrehachse stehende Innendrehachse des jeweiligen Zweiachsgelenks vorgespannt ist. Beispielsweise kann die Innendrehachse mittels einer Torsionsfeder vorgespannt sein. Auch ist denkbar, dass Zug-Druck-Federn zwischen dem jeweiligen Verbindungsglied und der Antriebsdrehachse des jeweiligen Zweiachsgelenks gespannt sind. Dadurch kann auf einfache Weise mögliches Gelenkspiel ausgeglichen werden. Ferner wird die Schwingungs- bzw. Vibrationsfestigkeit der Richtplattform verbessert.

Gemäß manchen Ausführungsformen kann die Trägerplattform als plattenförmiges Teil ausgebildet sein. Dies bietet den Vorteil, dass flächige Sensoren, wie z. B. optische Sensoren, Radarsensoren oder Spiegel auf einfache Weise an der Trägerplattform montiert werden können.

Gemäß einer Ausführungsform des Verfahrens kann vorgesehen sein, dass die Antriebseinrichtung einzeln jeweils derart betrieben werden, dass ein aktueller Rollwinkel relativ zu dem Neutral-Rollwinkel abhängig von dem Neigungswinkel gesteuert wird. Beispielsweise kann vorgesehen sein, dass der aktuelle Rollwinkel als Differenz zu dem Neutralrollwinkel gemäß einer festen Funktion vom Neigungswinkel abhängt und die Antriebseinrichtung dementsprechend angesteuert werden. Damit können Singularitäten, wie Strecklagen, auf einfache Weise umfahren und eine sehr einfache und robuste Steuerung der Bewegung der zweiten Plattform erzielt werden.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner gleich 45 Grad, bevorzugt kleiner 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Die im Zusammenhang mit einem der Aspekt der Erfindung offenbarten Merkmale und Vorteile sind auch für die anderen Aspekte der Erfindung offenbart und umgekehrt.

Im Folgenden wird die Erfindung unter Bezugnahme auf die Figuren der Zeichnungen erläutert. Von den Figuren zeigen:

Fig. 1     eine schematische Perspektivansicht eines Sensorsystems mit einer Richtplattform gemäß einem Ausführungsbeispiel der Erfindung, wobei eine erste Plattform und eine zweite Plattform der Richtplattform relativ zueinander in einer Neutralstellung positioniert sind;

Fig. 2     eine schematische Detailansicht eines Zweiachsgelenks einer Richtplattform gemäß einem Ausführungsbeispiel der Erfindung;

Fig. 3     eine vereinfachte Draufsicht auf eine Richtplattform gemäß einem Ausführungsbeispiel der Erfindung;

Fig. 4     eine schematische Perspektivansicht der in Fig. 1 gezeigten Richtplattform, wobei die erste Plattform und die zweite Plattform relativ zueinander gegenüber der Neutralstellung verkippt angeordnet sind;

Fig. 5     eine schematische Perspektivansicht der in Fig. 1 gezeigten Richtplattform, wobei die erste Plattform und die zweite Plattform relativ zueinander gegenüber der in Fig. 4 gezeigten Stellung weiter verkippt angeordnet sind; und

Fig. 6     eine schematische Ansicht eines Luftfahrzeugs gemäß einem Ausführungsbeispiel der Erfindung.

In den Figuren bezeichnen dieselben Bezugszeichen gleiche oder funktionsgleiche Komponenten, soweit nichts Gegenteiliges angegeben ist.

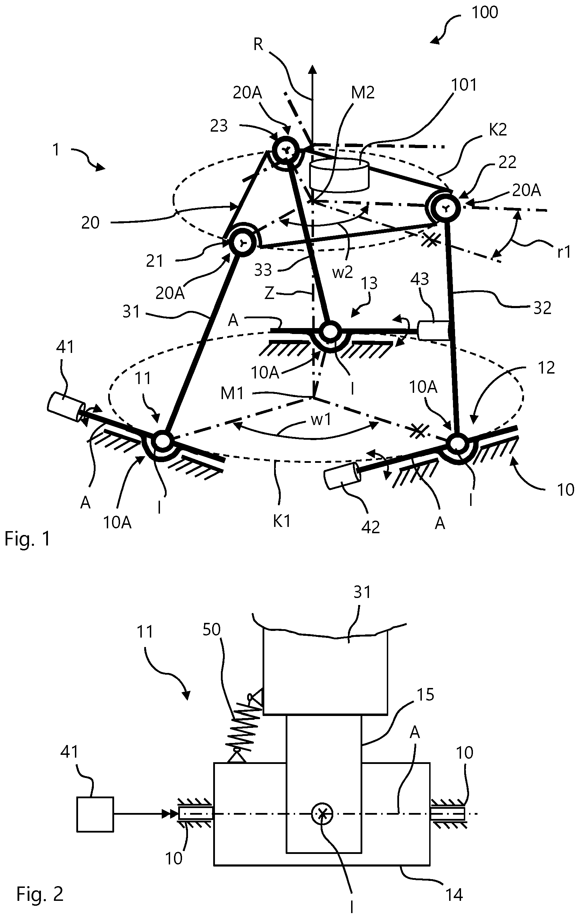

Fig. 1 zeigt beispielhaft und in rein schematischer Weise ein Sensorsystem 100, welches eine Richtplattform 1 und eine Sensoreinrichtung 101 aufweist. Die Sensoreinrichtung 101 ist in Fig. 1 lediglich symbolisch als Zylinder dargestellt und kann beispielsweise ein Radarsensor, ein optischer Sensor oder ein ähnlicher Überwachungssensor sein. Grundsätzlich wird hierin unter einer Sensoreinrichtung 101 auch ein Spiegel oder ein ähnliches Element einer Sensoranordnung verstanden. Das Sensorsystem 100 kann insbesondere zur Verwendung in einem Luftfahrzeug 100 vorgesehen sein, z. B. in einem Suchkopf einer Drohne, wie dies nachfolgend noch erläutert wird. Selbstverständlich sind auch andere mobile Anwendungen, z.B. auf Schiffen oder in Fahrzeugen, oder stationäre Anwendungen des Sensorsystems 100 denkbar, z. B. in Luftüberwachungsstationen. Ferner ist die nachfolgend beschriebene Richtplattform 1 nicht auf eine Verwendung in einem Sensorsystem beschränkt. Beispielsweise kann anstatt eine Sensoreinrichtung 101 auch ein Werkzeug, eine Beleuchtungseinrichtung, eine Antriebseinrichtung oder eine andere Struktur bzw. Komponente ausgerichtet, verlagert oder bewegt werden.

Die Richtplattform 1 ist in Fig. 1 in vereinfachter Weise ähnlich einem mechanischen bzw. kinematischen Ersatzschaltbild dargestellt. Wie in Fig. 1 beispielhaft gezeigt, kann die Richtplattform 1 ein erste Plattform 10, eine zweite Plattform 20, ein erstes Verbindungsglied 31, ein zweites Verbindungsglied 32, ein drittes Verbindungsglied 33, eine erste Antriebseinrichtung 41, eine zweite Antriebseinrichtung 42 und eine dritte Antriebseinrichtung 43 aufweisen.

Die erste Plattform 10 ist in Fig. 1 lediglich symbolisch als ortsfeste Struktur dargestellt. Allgemein kann die erste Plattform 10 als Gestell, z.B. als Rahmen oder Platte realisiert sein. Wie in Fig. 1 ebenfalls beispielhaft dargestellt ist, können an der ersten Plattform 10 ein erstes Zweiachsgelenk 11, ein zweites Zweiachsgelenk 12 und ein drittes Zweiachsgelenk 13 vorgesehen sein. Das erste Zweiachsgelenk 11, das zweite Zweiachsgelenk 12 und das dritte Zweiachsgelenk 13 weisen jeweils zwei Rotationsfreiheitsgrade auf. Insbesondere können ausschließlich rotatorische Freiheitsgrade vorgesehen sein. Beispielsweise können die Zweiachsgelenke 11, 12, 13 als Kardangelenke realisiert sein, wie dies in Fig. 2 beispielhaft dargestellt ist. Allgemein können die Zweiachsgelenke 11, 12, 13 eine erste Achse oder Antriebsdrehachse A und eine zweite Achse oder Innendrehachse I aufweisen, welche senkrecht auf die Antriebsdrehachse A steht. Damit werden zwei Rotationsfreiheitsgrade definiert.

Wie in Fig. 1 beispielhaft gezeigt, kann die erste Plattform 10 drei relativ zueinander ortsfest angeordnete erste Lagerstellen 10A aufweisen, wobei an jeder Lagerstelle 10A eine Gelenkstruktur eines jeweiligen Zweiachsgelenks 11, 12, 13 angeordnet ist, welche zumindest eine der Drehachsen A, I des jeweiligen Zweiachsgelenks 11, 12, 13 definiert. Wie in Fig. 2 beispielhaft gezeigt ist, kann bei einem Kardangelenk ein erster Rahmen 14 um die Antriebsachse A drehbar an der ersten Plattform 10 gelagert sein und ein zweiter Rahmen 15, an welchem ein jeweiliges Verbindungsglied 31, 32, 33 drehfest angebracht ist, kann um die Innenachse I drehbar an dem ersten Rahmen 14 gelagert sein. Alternativ kann das jeweiliges Verbindungsglied 31, 32, 33 drehfest an dem ersten Rahmen 14 angebracht sein und an dem jeweiligen Verbindungsglied 31, 32, 33 kann eine Gelenkstruktur ausgebildet sein, welche die Innendrehachse I definiert.

Wie in Fig. 1 weiterhin beispielhaft dargestellt ist, kann jede erste Lagerstelle 10A eine Ecke eines ersten Dreiecks bilden. Eine Ecke des ersten Dreiecks kann dadurch definiert sein, dass sich in der Ecke die Innendrehachse I und die Antriebsdrehachse A schneiden. Das erste Dreieck definiert somit eine erste Ebene. Weiterhin kann um das erste Dreieck ein erster Umkreis K1 konstruiert werden, auf welchem die Ecken des ersten Dreiecks liegen. Weiterhin kann eine senkrecht auf die erste Ebene und durch einen Mittelpunkt M1 des ersten Umkreises K1 verlaufende Zentralachse Z definiert werden, welche in Fig. 1 als Strichpunktlinie eingezeichnet ist. Die Zweiachsgelenke 11, 12, 13 bzw. die ersten Lagerstellen 10A, welche an den Ecken des ersten Dreiecks angeordnet sind, können in Bezug auf den Mittelpunkt M1 des ersten Umkreises K1 z.B. um einen Winkel w1 von 120 Grad zueinander beabstandet sein, so dass das erste Dreieck ein gleichseitiges Dreieck ist. Allgemein können die Zweiachsgelenke 11, 12, 13 bzw. die ersten Lagerstellen 10A um einen Winkel w1 von größer oder gleich 90 Grad und kleiner als 180 Grad relativ zueinander beabstandet sein. Weiterhin optional kann vorgesehen sein, dass sich die Antriebsdrehachsen A der Zweiachsgelenke 11, 12, 13 tangential zu dem ersten Umkreis K1 erstrecken, insbesondere in der ersten Ebene.

Die zweite Plattform 20 ist relativ zu der ersten Plattform 10 bewegbar angeordnet. Wie in Fig. 1 beispielhaft dargestellt, kann die zweite Plattform 20 beispielsweise als plattenförmiges Teil realisiert sein. Allgemein kann die zweite Plattform 20 als Gestell realisiert sein, z.B. in Form eines Rahmens, einer Platte oder dergleichen. Wie in Fig. 1 weiterhin schematisch dargestellt ist, können an der zweiten Plattform 20 ein erstes Dreiachsgelenk 21, ein zweites Dreiachsgelenk 22 und ein drittes Dreiachsgelenk 23 vorgesehen sein. Das erste Dreiachsgelenk 21, das zweite Dreiachsgelenk 22 und das dritte Dreiachsgelenk 23 weisen jeweils drei Rotationsfreiheitsgrade auf. Beispielsweise können die Dreiachsgelenke 21, 22, 23 als Kugelgelenke realisiert sein. Die Dreiachsgelenke 21, 22, 23 definieren drei senkrecht aufeinander stehende Drehachsen und damit drei rotatorische Freiheitsgrade. Insbesondere kann vorgesehen sein, dass die Dreiachsgelenke 21, 22, 23 ausschließlich rotatorische Freiheitsgrade definieren.

Wie in Fig. 1 beispielhaft gezeigt, kann die zweite Plattform 20 drei relativ zueinander ortsfest angeordnete zweite Lagerstellen 20A aufweisen, wobei an jeder zweiten Lagerstelle 20A eine Gelenkstruktur eines jeweiligen Dreiachsgelenks 21, 22, 23 angeordnet ist, welche zumindest eine der Drehachsen des jeweiligen Dreiachsgelenks 21, 22, 23 definiert. Im Beispiel eines Kugelgelenks sind alle drei Drehachsen des jeweiligen Dreiachsgelenks durch eine an der zweiten Plattform angebrachte Gelenkstruktur gebildet. Alternativ kann das jeweilige Verbindungsglied 31, 32, 33 beispielsweise drehfest an einem Rahmen eines an der zweiten Plattform 20 gelagerten Kardangelenks angebracht sein und an dem jeweiligen Verbindungsglied 31, 32, 33 kann eine Gelenkstruktur ausgebildet sein, welche die dritte Drehachse definiert.

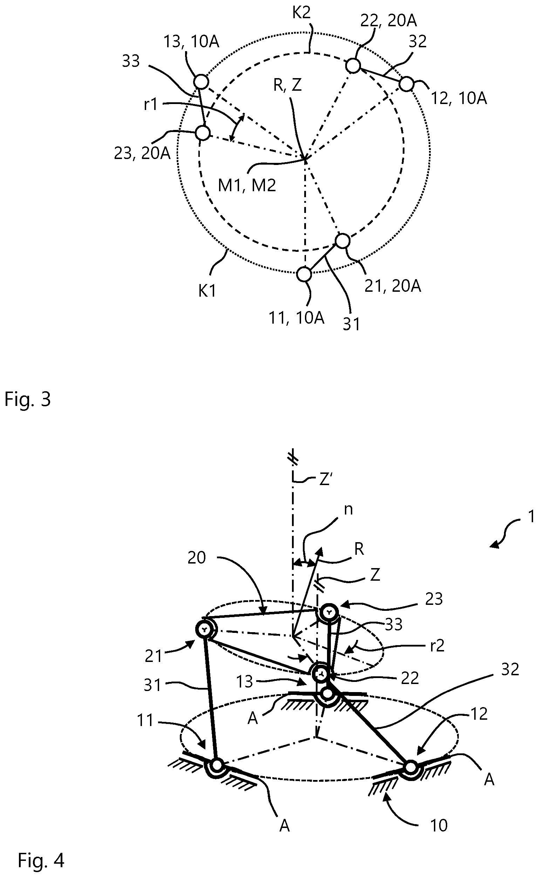

Wie in Fig. 1 weiterhin beispielhaft dargestellt ist, kann jede zweite Lagerstelle 20A eine Ecke eines zweiten Dreiecks bilden. Eine Ecke des zweiten Dreiecks kann dadurch definiert sein, dass sich in der Ecke die Drehachsen eines jeweiligen Dreiachsgelenks 21, 22, 23 schneiden. Das zweite Dreieck definiert somit eine zweite Ebene. Weiterhin kann um das zweite Dreieck ein zweiter Umkreis K2 konstruiert werden, auf welchem die Ecken des zweiten Dreiecks liegen. Weiterhin kann eine senkrecht auf die zweite Ebene und durch einen Mittelpunkt M2 des zweiten Umkreises K2 verlaufende Rollachse R definiert werden, welche in Fig. 1 als Pfeil eingezeichnet ist. Die Dreiachsgelenke 21, 22, 23 bzw. die zweiten Lagerstellen 20A, welche an den Ecken des zweiten Dreiecks angeordnet sind, können in Bezug auf den Mittelpunkt M2 des zweiten Umkreises K2 z.B. um einen Winkel w2 von 120 Grad zueinander beabstandet sein, so dass das zweite Dreieck ein gleichseitiges Dreieck ist. Allgemein können die Dreiachsgelenke 21, 22, 23 bzw. die zweiten Lagerstellen 20A um einen Winkel w2 von größer oder gleich 90 Grad und kleiner als 180 Grad relativ zueinander beabstandet sein. Wie in den Fign. 1 und 3 außerdem beispielhaft dargestellt ist, kann vorgesehen sein, dass der zweite Umkreis K2 einen kleineren Durchmesser als der erste Umkreis K1 aufweist.

In Fig. 1 ist rein beispielhaft dargestellt, dass die erste Plattform 10 als ortsfeste Basis und die zweite Plattform 20 als bewegbare Trägerplattform zum Halten der Sensoreinrichtung 101 oder zum Halten einer anderen Komponente, wie einem Werkzeug, einer Leuchte oder dergleichen ausgebildet ist. Beispielsweise kann die Basis mit einer mechanischen Schnittstelle, z.B. einem Flansch oder dergleichen, eines Luftfahrzeugs 200 verbunden werden. An der Trägerplattform können beispielsweise mechanische Schnittstellen (nicht dargestellt) zur Befestigung der Sensoreinrichtung 101 ausgebildet sein, z.B. in Form von Vorsprüngen, Vertiefungen, Bohrungen oder dergleichen. Selbstverständlich ist auch denkbar, dass die zweite Plattform 20 als Basis und die erste Plattform 10 als Trägerplattform zum Halten der Sensoreinrichtung 101 oder einer anderen Komponente ausgebildet ist.

Die Verbindungsglieder 31, 32, 33 sind in Fig. 1 rein beispielhaft als Stäbe dargestellt. Die Verbindungsglieder 31, 32, 33 sind jedoch nicht auf eine stabförmige Gestaltung beschränkt, sondern können allgemein als Strukturen fester Länge bzw. längenunveränderliche, z.B. starre Elemente ausgebildet sein. Wie in Fig. 1 beispielhaft gezeigt ist, können das erste Verbindungsglied 31, das zweite Verbindungsglied 32 und das dritte Verbindungsglied 33 jeweils die gleiche, konstante Länge aufweisen.

Wie in Fig. 1 schematisch dargestellt ist, kann das erste Verbindungsglied 31 mit einem ersten Ende mit dem ersten Zweiachsgelenk 11 und mit einem zweiten Ende mit dem ersten Dreiachsgelenk 21 verbunden sein. Allgemein ist die Länge einer kürzesten Verbindungslinie zwischen dem ersten Zweiachsgelenk 11 bzw. der zugehörigen ersten Lagerstelle 10A und dem ersten Dreiachsgelenk 21 bzw. der zugehörigen zweiten Lagerstelle 20A durch eine Länge des ersten Verbindungsglieds 31 definiert und konstant. Das zweite Verbindungsglied 32 kann mit einem ersten Ende mit dem zweiten Zweiachsgelenk 12 und mit einem zweiten Ende mit dem zweiten Dreiachsgelenk 22 verbunden sein. Allgemein ist die Länge einer kürzesten Verbindungslinie zwischen dem zweiten Zweiachsgelenk 12 bzw. der zugehörigen ersten Lagerstelle 10A und dem zweiten Dreiachsgelenk 22 bzw. der zugehörigen zweiten Lagerstelle 20A durch eine Länge des zweiten Verbindungsglieds 32 definiert und konstant. Das dritte Verbindungsglied 33 kann mit einem ersten Ende mit dem dritten Zweiachsgelenk 13 und mit einem zweiten Ende mit dem dritten Dreiachsgelenk 23 verbunden sein. Allgemein ist die Länge einer kürzesten Verbindungslinie zwischen dem dritten Zweiachsgelenk 13 bzw. der zugehörigen ersten Lagerstelle 10A und dem dritten Dreiachsgelenk 23 bzw. der zugehörigen zweiten Lagerstelle 20A durch eine Länge des dritten Verbindungsglieds 33 definiert und konstant. Auf diese Weise sind die erste und die zweite Plattform 10, 20 durch die Verbindungsglieder 31, 32, 33 kinematisch aneinander gekoppelt, wobei die zweite Plattform 20 entlang der Zentralachse Z relativ zu der ersten Plattform 10 beabstandet ist. Ferner sind somit die erste Plattform 10 und die zweite Plattform 10, 20 ausschließlich durch Rotationsbewegungen der Verbindungsglieder 31, 32, 33 relativ zueinander bewegbar, wobei die Rotationsbewegungen der Verbindungsglieder 31, 32, 33 durch die Zweiachsgelenke 11, 12, 13 und die Dreiachsgelenke 21, 22, 23 geführt werden.

Die Antriebseinrichtungen 41, 42, 43 sind in Fig. 1 lediglich symbolisch als Zylinder dargestellt und können beispielsweise als Elektromotoren, als hydraulische Stellglieder oder dergleichen realisiert sein. Insbesondere ist jede der Antriebseinrichtungen 41, 42, 43 separat ansteuerbar bzw. betätigbar, z.B. über eine elektronische Steuerungsvorrichtung (nicht dargestellt). Wie in Fig. 1 beispielhaft gezeigt, kann die erste Antriebseinrichtung 41 an die Antriebsdrehachse A des ersten Zweiachsgelenks 11 gekoppelt sein, die zweite Antriebseinrichtung 42 kann an die Antriebsdrehachse A des zweiten Zweiachsgelenks 12 gekoppelt sein und die dritte Antriebseinrichtung 43 kann an die Antriebsdrehachse A des dritten Zweiachsgelenks 12 gekoppelt sein. Allgemein kann jeweils eine Antriebseinrichtung 41, 42, 43 an jeweils ein Zweiachsgelenk 11, 12, 13 gekoppelt sein, insbesondere kinematisch gekoppelt, um das an dem jeweiligen Zweiachsgelenk 11, 12, 13 gelagerte Verbindungsglied 31, 32, 33 um die Antriebsdrehachse A des Zweiachsgelenks 11, 12, 13 zu drehen und dadurch eine Rotationsbewegung der Verbindungsglieder 31, 32, 33 zu verursachen, welche eine Bewegung der ersten und der zweiten Plattform 10, 20 relativ zueinander bewirkt. Beispielsweise kann eine Antriebswelle der jeweiligen Antriebseinrichtung 41, 42, 43 kinematisch an den ersten Rahmen 14 eines jeweiligen als Kardangelenk ausgeführten Zweiachsgelenks 11, 12, 13 gekoppelt sein, so dass der äußere Rahmen 14 um die Antriebsachse A drehbar ist, wie dies in Fig. 2 symbolisch dargestellt ist. Dadurch wird der an den zweiten Rahmen 15 des Kardangelenks um die Antriebsachse A gedreht. Aufgrund der kinematischen Kopplung der Verbindungsstäbe 31, 32, 33 an das jeweilige Zweiachsgelenk 11, 12, 13 und an das jeweilige Dreiachsgelenk 21, 22, 23 bewirkt die Drehung um die Antriebsachse A ein Verschwenken des jeweiligen Verbindungsstabs 31, 32, 33 um die Antriebsachse A und ein Verschwenken des jeweiligen Verbindungsstabs 31, 32, 33 um die Innenachse I, wodurch zumindest eine Drehung der zweiten Plattform 20 um die Rollachse R und optional auch eine Neigung der Rollachse R relativ zu der Zentralachse Z einstellbar ist.

Wie in Fig. 2 weiterhin beispielhaft dargestellt ist, kann an einem oder mehreren der Zweiachsgelenke 11, 12, 13 eine Vorspanneinrichtung 50, z.B. in Form einer Zug-Druck-Feder vorgesehen sein. Wie in Fig. 2 beispielhaft gezeigt, kann die Vorspanneinrichtung 50 an dem äußeren Rahmen 14 des Kardangelenks und dem an diesem Kardangelenk gelagerten Verbindungsstab 31, 32, 33 fixiert sein. Dadurch wirkt die Vorspanneinrichtung 50 einer Drehung des Verbindungsstabs 31, 32, 33 um die Innenachse I entgegen. Es ist auch denkbar, eine Torsionsfeder an die Innenachse I des jeweiligen Zweiachsgelenks 11, 12, 13 zu koppeln. Allgemein kann somit zumindest eines der Verbindungsglieder 31, 32, 33 entgegen einer Drehung um die Innendrehachse I des jeweiligen ersten Gelenks vorgespannt sein, insbesondere mittels einer Vorspanneinrichtung 50.

Fig. 1 zeigt die Richtplattform 1 in einer Neutralstellung oder Neutralposition. In Fig. 3 ist eine Draufsicht auf die in der Neutralstellung angeordnete Richtplattform 1 dargestellt. Wie in den Fign. 1 und 3 erkennbar, sind in der Neutralstellung der erste Umkreis K1 und der zweite Umkreis K2 konzentrisch zueinander angeordnet. Ferner sind in der Neutralposition die Zweiachsgelenke 11, 12, 13 bzw. die ersten Lagerstellen 10A und die Dreiachsgelenke 21, 22, 23 bzw. die zweiten Lagerstellen 20A in Bezug auf eine Rollachse R um einen Neutral-Rollwinkel r1 von größer 0 Grad, z.B. um einen Neutral-Rollwinkel r1 in einem Bereich zwischen 3 Grad und 30 Grad relativ zueinander beabstandet. In Fig. 1 ist beispielhaft gezeigt, dass die Rollachse R in der Neutralposition optional parallel bzw. koaxial zu der Zentralachse Z verlaufen kann. Allgemein sind der Mittelpunkt M1 des ersten Umkreise K1 und der Mittelpunkt M2 des zweiten Umkreises K2 koaxial zu der Zentralachse Z angeordnet. Durch die Verrollung um den Neutral-Rollwinkel r1 in der Neutralposition sind Verbindungsglieder 31, 32, 33 um die Innenachse I der Zweiachsgelenke 11, 12, 13 geschwenkt, so dass sich zwischen der Innenachse I und der Antriebsachse A ein Winkel von ungleich 90 Grad ergibt. Auf diese Weise wird ein Anfahren, also ein Starten der Bewegung der Plattformen 10, 20 relativ zueinander erleichtert, da die Plattformen 10, 20 und die Verbindungsglieder 31, 32, 33 nicht in einer singulären Stellung angeordnet sind.

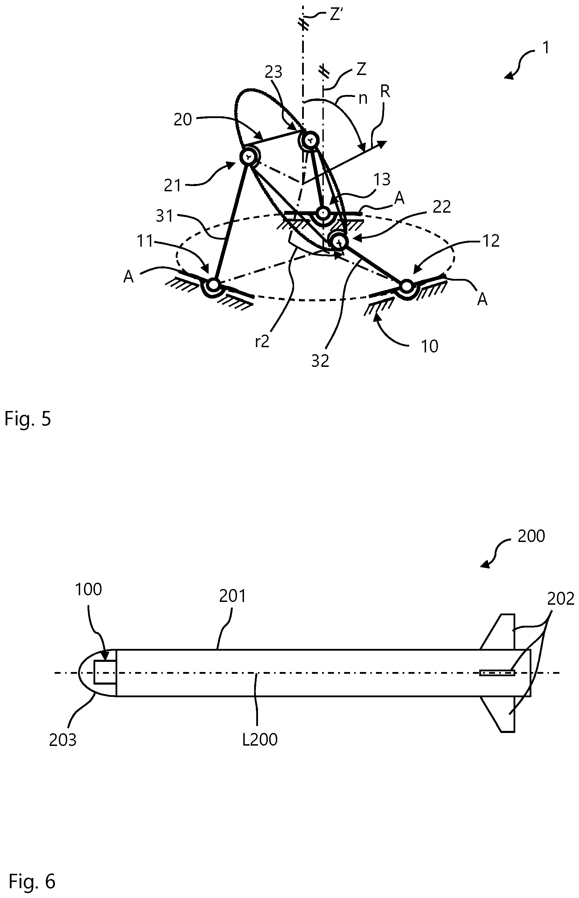

Aus dieser Neutralposition heraus kann in einem Verfahren zum Betreiben der Richtplattform 1 ein Verschwenken der Verbindungsglieder 31, 32, 33 mittels der Antriebseinrichtungen 41, 42, 43 um die jeweilige Antriebsdrehachse A erfolgen. Hierbei werden die Antriebseinrichtungen 41, 42, 43 einzeln angesteuert, z. B. durch eine Steuerungsvorrichtung (nicht gezeigt), um einen gewünschten Drehwinkel um die Antriebsachse A einzustellen. Die Antriebseinrichtungen 41, 42, 43 können hierbei einzeln jeweils derart betrieben werden, dass durch das Verschwenken der Verbindungsglieder 31, 32, 33 um die jeweilige Antriebsdrehachse A die zweite Plattform 20 relativ zu der Zentralachse Z um einen Neigungswinkel n verkippt und um die Rollachse R gedreht wird. Damit wird ausschließlich durch die Rotationsbewegung der Verbindungsglieder 31, 32, 33 eine Bewegung der Plattform 20 erzielt. Fig. 4 zeigt rein beispielhaft eine erste Kippstellung der Richtplattform 1. Wie in Fig. 4 beispielhaft gezeigt, wurden die Antriebseinrichtungen 41, 42, 43 derart betrieben, dass durch das Verschwenken der Verbindungsglieder 31, 32, 33 der Rollwinkel r2 gegenüber dem Neutral-Rollwinkel r1 und ein Neigungswinkel n zwischen der Rollachse R und der Zentralachse Z jeweils vergrößert wurde. In Fig. 5 ist eine zweite Kippstellung der Richtplattform 1 gezeigt. Zum Bewegen der Richtplattform 1 in die zweite Kippstellung, wurden die Antriebseinrichtungen 41, 42, 43 derart betrieben, dass durch das Verschwenken der Verbindungsglieder 31, 32, 33 der Rollwinkel r2 gegenüber der ersten Kippstellung verkleinert und ein Neigungswinkel n zwischen der Rollachse R und er Zentralachse Z weiter vergrößert wurde.

In der in Fig. 4 beispielhaft dargestellten ersten Kippstellung sind die Verbindungsglieder 31, 32, 33 nahe einer singulären Stellung angeordnet, welche sich ergibt, wenn eine Verbindungslinie zwischen dem Mittelpunkt M2 des zweiten Umkreises K2 und dem Schnittpunkts der Drehachsen eines Dreiachsgelenks 21, 22, 23 koaxial zu einer Verbindungslinie zwischen Schnittpunkt der Drehachsen dieses Dreiachsgelenks 21, 22, 23 und dem Schnittpunkt der Drehachsen A, I eines Zweiachsgelenks 11, 12, 13, das durch ein Verbindungsglied 31, 32, 33 mit diesem Dreiachsgelenk 21, 22, 23 verbunden ist, angeordnet sind. Durch die gezielte gleichzeitige Drehung der zweiten Plattform 20 um die Rollachse R und die Verkippung der Rollachse R relativ zu der Zentralachse können solche singulären Stellungen auf einfache Weise umfahren und ein Neigung der zweiten Plattform 20 über die singuläre Stellung hinaus erzielt werden. So können beispielsweise Neigungswinkel n in einem Bereich zwischen 0 Grad und 65 Grad, insbesondere zwischen 0 Grad und 60 Grad eingestellt werden. Allgemein kann also vorgesehen sein, dass die Antriebseinrichtungen 41, 42, 43 einzeln jeweils derart betrieben werden, dass ein aktueller Rollwinkel r2 relativ zu dem Neutral-Rollwinkel r1 abhängig von dem Neigungswinkel n gesteuert wird. Zudem kann auf diese Weise eine Verkippung der zweiten Plattform 20 relativ zu der ersten Plattform 10 mit relativ kleiner seitlicher Auslenkung der Plattformen 10, 20 zueinander erzielt werden.

In Fig. 6 ist rein beispielhaft ein Luftfahrzeug 200 in Form eines unbemannten Flugkörpers dargestellt. Der Flugkörper kann insbesondere einen eine Längsachse L200 definierenden Rumpf 201 aufweisen, wobei an einem ersten Ende des Rumpfs 201 Steuerfinnen 202 vorgesehen sind. Allgemein kann der Flugkörper einen Rumpf 201 und Steuerflächen aufweisen. Optional können zusätzlich Tragflächen oder Flügel vorgesehen sein. Wie in Fig. 6 weiterhin beispielhaft gezeigt ist, kann der Flugkörper oder das Luftfahrzeug 200 einen aerodynamischen Dom 203 als Aufnahmeraum aufweisen. Der Dom 203 kann beispielsweise einen Suchkopf oder ein anderes Navigations- und/oder Kommunikationssystem aufweisen. Wie in Fig. 6 beispielhaft gezeigt ist, kann das Luftfahrzeug 200, unabhängig von der restlichen Gestaltung des Luftfahrzeugs 200, ein Sensorsystem 100 aufweisen, welches insbesondere wie voranstehend beschrieben ausgebildet sein kann. Beispielsweise kann das Sensorsystem 100 in dem Dom 203 angeordnet sein, wie dies in Fig. 6 beispielhaft und rein schematisch dargestellt ist. Zum Beispiel kann die Basis der Richtplattform 1 des Sensorsystems 100 fest mit einem Boden des Doms 203 verbunden sein und die Trägerplattform mit der Sensoreinrichtung 101, z.B. in Form eines Radarsensors oder eines optischen Sensors, kann von dem Rumpf 201 des Luftfahrzeugs 200 abgewandt angeordnet sein. Aufgrund des robusten Aufbaus der Richtplattform 1 mit einer geringen Anzahl an Komponenten und platzsparenden Bewegbarkeit der zweiten Plattform 20, die sich aufgrund der durch die erste Plattform 10, die Zweiachsgelenke 11-13, die Verbindungsglieder 31-33, die Dreiachsgelenke 21-23 und die zweite Plattform 20 definierten Kinematik ergibt, kann ein sehr leistungsfähiges Sensorsystem 100 in einfacher Weise in ein Luftfahrzeug 200 integriert werden. Insbesondere bei dem in Luftfahrzeugen 200 typischerweise begrenzten Bauraumverhältnissen ist der beschriebene Aufbau der Richtplattform 1 vorteilhaft.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar.

BEZUGSZEICHENLISTE

| 1 | Richtplattform |
|---|---|
| 10 | erste Plattform |
| 10A | erste Lagerstellen |
| 11-13 | Zweiachsgelenke |
| 14 | erster Rahmen des Kardangelenks |
| 15 | zweiter Rahmen des Kardangelenks |
| 20 | zweite Plattform |
| 20A | zweite Lagerstellen |
| 21-23 | Dreiachsgelenke |
| 31-33 | Verbindungsglieder |
| 41-43 | Antriebseinrichtungen |
| 50 | Vorspanneinrichtung |
| | |
| 100 | Sensorsystem |
| 101 | Sensoreinrichtung |
| 200 | Luftfahrzeug |
| 201 | Rumpf |
| 202 | Steuerfinnen |
| 203 | Dom |
| | |
| A | Antriebsdrehachse |
| K1 | erster Umkreis |
| K2 | zweiter Umkreis |
| I | Innendrehachse |
| L200 | Längsachse |
| M1 | Mittelpunkt des ersten Umkreises |
| M2 | Mittelpunkt des zweiten Umkreises |
| R | Rollachse |
| r1 | erster Rollwinkel |
| w1 | Winkel zwischen den Zweiachsgelenken |
| w2 | Winkel zwischen den Dreiachsgelenken |

**Patentansprüche**

1. Richtplattform (1), insbesondere für eine Sensoreinrichtung (101), aufweisend:

eine erste Plattform (10) mit einer ersten Lagerstelle (10A) eines ersten Zweiachsgelenks (11), einer ersten Lagerstelle (10A) eines zweiten Zweiachsgelenks (12) und einer ersten Lagerstelle (10A) eines dritten Zweiachsgelenks (13), wobei die Zweiachsgelenke (11; 12; 13) jeweils zwei Rotationsfreiheitsgrade definieren, und wobei die ersten Lagerstellen (10A) zu einem ersten Dreieck angeordnet sind;

eine zweite Plattform (20) mit einer zweiten Lagerstelle (20A) eines ersten Dreiachsgelenk (21), einer zweiten Lagerstelle (20A) eines zweiten Dreiachsgelenk (22) und einer zweiten Lagerstelle (20A) eines dritten Dreiachsgelenk (23), wobei die Dreiachsgelenke (21; 22; 23) jeweils drei Rotationsfreiheitsgrade definieren, und wobei die zweiten Lagerstellen (20A) zu einem zweiten Dreieck angeordnet sind, wobei die erste Plattform (10) als Basis und die zweite Plattform (20) als Trägerplattform zum Halten der Sensoreinrichtung (101) oder einer zu bewegenden Komponente ausgebildet ist oder die zweite Plattform (20) als Basis und die erste Plattform (10) als Trägerplattform zum Halten der Sensoreinrichtung (101) ausgebildet ist;

ein jeweils an dem ersten Zweiachsgelenk (11) und dem ersten Dreiachsgelenk (21) gelagertes erstes Verbindungsglied (31), welches sich mit einer fixen Länge zwischen der ersten Lagerstelle (10A) es ersten Zweiachsgelenks (11) und der zweiten Lagerstelle (20A) des ersten Dreiachsgelenks (21) erstreckt;

ein jeweils an dem zweiten Zweiachsgelenk (12) und dem zweiten Dreiachsgelenk (22) gelagertes zweites Verbindungsglied (32), welches sich mit einer fixen Länge zwischen der ersten Lagerstelle (10A) des zweiten Zweiachsgelenks (12) und der zweiten Lagerstelle (20A) des zweiten Dreiachsgelenks (22) erstreckt;

ein jeweils an dem dritten Zweiachsgelenk (13) und dem dritten Dreiachsgelenk (23) gelagertes drittes Verbindungsglied (33), welches sich mit einer fixen Länge zwischen der ersten Lagerstelle (10A) des dritten Zweiachsgelenks (13) und der zweiten Lagerstelle (20A) des dritten Dreiachsgelenks (23) erstreckt; und

eine erste Antriebseinrichtung (41), eine zweite Antriebseinrichtung (42) und

eine dritte Antriebseinrichtung (43), wobei jeweils eine Antriebseinrichtung (41; 42; 43) an jeweils ein Zweiachsgelenk (11; 12; 13) gekoppelt ist, um das an dem jeweiligen Zweiachsgelenk (11; 12; 13) gelagerte Verbindungsglied (31; 32; 33) um eine Antriebsdrehachse (A) des Zweiachsgelenks (11; 12; 13) zu drehen.

2. Richtplattform (1) nach Anspruch 1, wobei das erste Verbindungsglied (31), das zweite Verbindungsglied (32) und das dritte Verbindungsglied (33) jeweils die gleiche Länge aufweisen.

3. Richtplattform (1) nach Anspruch 1 oder 2, wobei die ersten Lagerstellen (10A) der Zweiachsgelenke (11; 12; 13) in Bezug auf einen Mittelpunkt (M1) eines ersten Umkreises (K1) des durch die Anordnung der ersten Lagerstellen (10A) definierten ersten Dreiecks um einen Winkel (w1) von größer oder gleich 90 Grad und kleiner als 180 Grad relativ zueinander beabstandet sind und/oder wobei die zweiten Lagerstellen (20A) der Dreiachsgelenke (21; 22; 23) in Bezug auf einen Mittelpunkt (M2) eines zweiten Umkreises (K2) des durch die Anordnung der zweiten Lagerstellen (20A) definierten zweiten Dreiecks um einen Winkel (w2) von größer oder gleich 90 Grad und kleiner als 180 Grad relativ zueinander beabstandet sind.

4. Richtplattform (1) nach Anspruch 3, wobei das erste Dreieck und/oder das zweite Dreieck gleichseitige Dreiecke sind.

5. Richtplattform (1) nach Anspruch 3 oder 4, wobei der zweite Umkreis (K2) einen kleineren Durchmesser aufweist als der erste Umkreis (K1).

6. Richtplattform (1) nach einem der voranstehenden Ansprüche, wobei sich die Antriebsdrehachsen (A) der Zweiachsgelenke (11; 12; 13) tangential zu einem Umkreis (K1) des durch die Zweiachsgelenke definierten ersten Dreiecks erstrecken.

7. Richtplattform (1) nach einem der voranstehenden Ansprüche, wobei die Zweiachsgelenke (11; 12; 13) als Kardangelenke ausgebildet sind.

8. Richtplattform (1) nach einem der voranstehenden Ansprüche, wobei die Dreiachsgelenke (21; 22; 23) als Kugelgelenke ausgebildet sind.

9. Richtplattform (1) nach einem der voranstehenden Ansprüche, wobei zumindest eines der Verbindungsglieder (31; 32; 33) entgegen einer Drehung um eine senkrecht auf die Antriebsdrehachse (A) stehende Innendrehachse (I) des jeweiligen Zweiachsgelenks vorgespannt ist.

10. Sensorsystem (100), insbesondere für ein Luftfahrzeug (200), aufweisend:

    eine Richtplattform (1) nach einem der voranstehenden Ansprüche; und
    eine Sensoreinrichtung (101), welche an der Trägerplattform angeordnet ist.

11. Luftfahrzeug (200), insbesondere unbemannter Flugkörper, mit einem Sensorsystem (100) nach Anspruch 10.

12. Verfahren zum Betreiben einer Richtplattform nach einem der Ansprüche 1 bis 9, aufweisend:
    Verschwenken der Verbindungsglieder (31; 32; 33) mittels der Antriebseinrichtungen (41; 42; 43) um die jeweilige Antriebsdrehachse (A) relativ zu einer Neutralposition, in welcher ein erster Umkreis (K1) des ersten Dreiecks und ein zweiter Umkreis (K2) des zweiten Dreiecks konzentrisch zueinander angeordnet sind und die ersten Lagerstellen (10A) der Zweiachsgelenke (11; 12; 13) und die zweiten Lagerstellen (20A) der Dreiachsgelenke (21; 22; 23) in Bezug auf eine Rollachse (R) um einen Neutral-Rollwinkel (r1) relativ zueinander beabstandet sind, wobei die Rollachse (R) senkrecht auf eine durch die zweiten Lagerstellen (20A) definierte Ebene steht und durch einen Mittelpunkt (M2) des zweiten Umkreises (K2) verläuft, und wobei die Antriebseinrichtung (41; 42; 43) einzeln jeweils derart betrieben werden, dass durch das Verschwenken der Verbindungsglieder (31; 32; 33) um die jeweilige Antriebsdrehachse (A) die zweite Plattform (20) relativ zu einer in Bezug auf die erste Plattform (10) ortsfesten Zentralachse (Z) um einen Neigungswinkel (n) verkippt und um die Rollachse (R) gedreht wird, wobei die Zentralachse (Z) senkrecht auf eine durch die ersten Lagerstellen (10A) definierte Ebene steht und durch einen Mittelpunkt (M1) des ersten Umkreises (K1) verläuft.

13. Verfahren nach Anspruch 12, wobei die Antriebseinrichtung (41; 42; 43) einzeln jeweils derart betrieben werden, dass ein aktueller Rollwinkel (r2) relativ zu dem Neutral-Rollwinkel (r1) abhängig von dem Neigungswinkel (n) gesteuert wird.

**Claims**

1. Alignment platform (1), in particular for a sensor device (101), comprising:

   a first platform (10) having a first mounting point (10A) of a first biaxial joint (11), a first mounting point (10A) of a second biaxial joint (12) and a first mounting point (10A) of a third biaxial joint (13), the biaxial joints (11; 12; 13) each defining two rotational degrees of freedom, and the first mounting points (10A) being arranged in a first triangle;
   a second platform (20) having a second mounting point (20A) of a first triaxial joint (21), a second mounting point (20A) of a second triaxial joint (22) and a second mounting point (20A) of a third triaxial joint (23), the triaxial joints (21; 22; 23) each defining three rotational degrees of freedom, and the second mounting points (20A) being arranged in a second triangle, the first platform (10) being formed as a base and the second platform (20) being formed as a carrier platform for holding the sensor device (101) or a component to be moved, or the second platform (20) being formed as a base and the first platform (10) being formed as a carrier platform for holding the sensor device (101);
a first connecting member (31) mounted on each of the first biaxial joint (11) and the first triaxial joint (21) and
extending over a fixed length between the first mounting point (10A) of the first biaxial joint (11) and the second mounting point (20A) of the first triaxial joint (21);
a second connecting member (32) mounted on each of the second biaxial joint (12) and the second triaxial joint (22) and extending over a fixed length between the first mounting point (10A) of the second biaxial joint (12) and the second mounting point (20A) of the second triaxial joint (22);
a third connecting member (33) mounted on each of the third biaxial joint (13) and the third triaxial joint (23) and
extending over a fixed length between the first mounting point (10A) of the third biaxial joint (13) and the second mounting point (20A) of the third triaxial joint (23); and
a first drive device (41), a second drive device (42) and
a third drive device (43), each drive device (41; 42; 43) being coupled to an associated biaxial joint (11; 12; 13) so as to rotate the connecting member (31; 32; 33) mounted on the associated biaxial joint (11; 12; 13) about a rotational driveshaft (A) of the biaxial joint (11; 12; 13).

2. Alignment platform (1) according to claim 1, wherein the first connecting member (31), the second connecting member (32) and the third connecting member (33) are each of the same length.

3. Alignment platform (1) according to either claim 1 or claim 2, wherein the first mounting points (10A) of the biaxial joints (11; 12; 13) are spaced apart from one another by an angle (w1) greater than or equal to 90 degrees and less than 180 degrees about a centre (M1) of a first circumscribed circle (K1) of the first triangle defined by the arrangement of the first mounting points (10A) and/or wherein the second mounting points (20A) of the triaxial joints (21; 22; 23) are spaced apart from one another by an angle (w2) greater than or equal to 90 degrees and less than 180 degrees about a centre (M2) of a second circumscribed circle (K2) of the second triangle defined by the arrangement of the second mounting points (20A).

4. Alignment platform (1) according to claim 3, wherein the first triangle and/or the second triangle are equilateral triangles.

5. Alignment platform (1) according to either claim 3 or claim 4, wherein the second circumscribed circle (K2) has a smaller diameter than the first circumscribed circle (K1).

6. Alignment platform (1) according to any of the preceding claims, wherein the rotational driveshafts (A) of the biaxial joints (11; 12; 13) extend at a tangent to a circumscribed circle (K1) of the first triangle defined by the biaxial joints.

7. Alignment platform (1) according to any of the preceding claims, wherein the biaxial joints (11; 12; 13) are formed as cardan joints.

8. Alignment platform (1) according to any of the preceding claims, wherein the triaxial joints (21; 22; 23) are formed as ball joints.

9. Alignment platform (1) according to any of the preceding claims, wherein at least one of the connecting members (31; 32; 33) is biased against a rotation about an internal rotational shaft (I), perpendicular to the rotational driveshaft (A), of the associated biaxial joint.

10. Sensor system (100), in particular for an aircraft (200), comprising:

    an alignment platform (1) according to any of the preceding claims; and
    a sensor device (101) arranged on the carrier platform.

11. Aircraft (200), in particular an unmanned projectile, comprising a sensor system (100) according to claim 10.

12. Method for operating an alignment platform according to any of claims 1 to 9, comprising:

    pivoting the connecting members (31; 32; 33) about the associated rotational driveshafts (A) by means of the drive devices (41; 42; 43), with respect to a neutral position,
    in which a first circumscribed circle (K1) of the first triangle and a second circumscribed circle (K2) of the second triangle are arranged mutually concentrically, and
    the first mounting points (10A) of the biaxial joints (11; 12; 13) and the second mounting points (20A) of the triaxial joints (21; 22; 23) are spaced apart from one another by a neutral roll angle (r1) about a roll axis (R), the roll axis (R) being perpendicular to a plane defined by the second mounting points (20A) and said axis extending through a centre (M2) of the second circumscribed circle (K2), and the drive devices (41; 42; 43) each individually being operated in such a way that the pivoting of the connecting members (31; 32; 33) about the associated rotational driveshafts (A) tilts the second platform (20) through an angle of inclination (n) about a central axis (Z) stationary with respect to the first platform (10) and rotates it about the roll axis (R), the central axis (Z) being perpendicular to a plane defined by the first mounting points (10A) and said axis extending through a centre (M1) of the first circumscribed circle (K1).

13. Method according to claim 12, wherein the drive devices (41; 42; 43) are each individually operated in such a way that a current roll angle (r2) with respect to the neutral roll angle (r1) is controlled independently of the angle of inclination (n).

**Revendications**

1. Plate-forme d'orientation (1), en particulier pour un dispositif de capteur (101), présentant :

    une première plate-forme (10) avec un premier point d'appui (10A) d'une première articulation à deux axes (11), un premier point d'appui (10A) d'une deuxième articulation à deux axes (12) et un premier point d'appui (10A) d'une troisième articulation à deux axes (13), dans laquelle les articulations à deux axes (11; 12 ; 13) définissent chacune deux degrés de liberté de rotation, et dans laquelle les premiers points d'appui (10A) sont disposés en un premier triangle ;
    une deuxième plate-forme (20) avec un deuxième point d'appui (20A) d'une première articulation à trois axes (21), un deuxième point d'appui (20A) d'une deuxième articulation à trois axes (22) et un deuxième point d'appui (20A) d'une troisième articulation à trois axes (23), dans laquelle les articulations à trois axes (21 ; 22 ; 23) définissent chacune trois degrés de liberté de rotation,
    et dans laquelle les deuxièmes points d'appui (20A) sont disposés en un deuxième triangle, dans laquelle la première plate-forme (10) est conçue comme base et la deuxième plate-forme (20) comme plate-forme de support pour supporter le dispositif de capteur (101) ou un composant à déplacer, ou
    la deuxième plate-forme (20) est conçue comme base et la première plate-forme (10) comme plate-forme de support pour supporter le dispositif de capteur (101) ;
    un premier élément de liaison (31) monté respectivement sur la première articulation à deux axes (11) et la première articulation à trois axes (21), qui s'étend avec une longueur fixe entre le premier point d'appui (10A) de la première articulation à deux axes (11) et le deuxième point d'appui (20A) de la première articulation à trois axes (21) ;

un deuxième élément de liaison (32) monté respectivement sur la deuxième articulation à deux axes (12) et la deuxième articulation à trois axes (22), qui s'étend avec une longueur fixe entre le premier point d'appui (10A) de la deuxième articulation à deux axes (12) et le deuxième point d'appui (20A) de la deuxième articulation à trois axes (22) ;

un troisième élément de liaison (33) monté respectivement sur la troisième articulation à deux axes (13) et la troisième articulation à trois axes (23), qui s'étend avec une longueur fixe entre le premier point d'appui (10A) de la troisième articulation à deux axes (13) et le deuxième point d'appui (20A) de la troisième articulation à trois axes (23) ; et

un premier dispositif d'entraînement (41), un deuxième dispositif d'entraînement (42) et un troisième dispositif d'entraînement (43), dans laquelle un dispositif d'entraînement respectif (41 ; 42 ; 43) est couplé à une articulation à deux axes respective (11 ; 12 ; 13) pour faire tourner l'élément de liaison (31 ; 32 ; 33) monté sur l'articulation à deux axes respective (11 ; 12 ; 13) autour d'un axe de rotation d'entraînement (A) de l'articulation à deux axes (11 ; 12 ; 13).

2. Plate-forme d'orientation (1) selon la revendication 1, dans laquelle le premier élément de liaison (31), le deuxième élément de liaison (32) et le troisième élément de liaison (33) présentent tous la même longueur.

3. Plate-forme d'orientation (1) selon la revendication 1 ou 2, dans laquelle les premiers points d'appui (10A) des articulations à deux axes (11 ; 12 ; 13) sont espacés les uns des autres d'un angle (w1) supérieur ou égal à 90 degrés et inférieur à 180 degrés par rapport à un centre (M1) d'un premier cercle circonscrit (K1) du premier triangle défini par la disposition des premiers points d'appui (10A) et/ou dans laquelle les deuxièmes points d'appui (20A) des articulations à trois axes (21 ; 22 ; 23) sont espacés les uns des autres d'un angle (w2) supérieur ou égal à 90 degrés et inférieur à 180 degrés par rapport à un centre (M2) d'un deuxième cercle circonscrit (K2) du deuxième triangle défini par la disposition des deuxièmes points d'appui (20A).

4. Plate-forme d'orientation (1) selon la revendication 3, dans laquelle le premier triangle et/ou le deuxième triangle sont des triangles équilatéraux.

5. Plate-forme d'orientation (1) selon la revendication 3 ou 4, dans laquelle le deuxième cercle circonscrit (K2) présente un diamètre inférieur à celui du premier cercle circonscrit (K1).

6. Plate-forme d'orientation (1) selon l'une des revendications précédentes, dans laquelle les axes de rotation d'entraînement (A) des articulations à deux axes (11 ; 12 ; 13) s'étendent tangentiellement à un cercle circonscrit (K1) du premier triangle défini par les articulations à deux axes.

7. Plate-forme d'orientation (1) selon l'une des revendications précédentes, dans laquelle les articulations à deux axes (11 ; 12 ; 13) sont conçues comme des articulations à cardan.

8. Plate-forme d'orientation (1) selon l'une des revendications précédentes, dans laquelle les articulations à trois axes (21 ; 22 ; 23) sont conçues comme des articulations à rotule.

9. Plate-forme d'orientation (1) selon l'une des revendications précédentes, dans laquelle au moins l'un des éléments de liaison (31 ; 32 ; 33) est précontraint à l'encontre d'une rotation autour d'un axe de rotation intérieur (I), perpendiculaire à l'axe de rotation d'entraînement (A), de l'articulation à deux axes respective.

10. Système de capteur (100), en particulier pour un aéronef (200), présentant : une plate-forme d'orientation (1) selon l'une des revendications précédentes ; et un dispositif de capteur (101) disposé sur la plate-forme de support.

11. Aéronef (200), en particulier missile sans pilote, doté d'un système de capteur (100) selon la revendication 10.

12. Procédé de fonctionnement d'une plate-forme d'orientation selon l'une des revendications 1 à 9, présentant les étapes consistant à :
faire pivoter les éléments de liaison (31 ; 32 ; 33) au moyen des dispositifs d'entraînement (41 ; 42 ; 43) autour de l'axe de rotation d'entraînement respectif (A) par rapport à une position neutre dans laquelle un premier cercle circonscrit (K1) du premier triangle et un deuxième cercle circonscrit (K2) du deuxième triangle sont disposés concentriquement l'un par rapport à l'autre et les premiers points d'appui (10A) des articulations à deux axes (11 ; 12 ; 13) et les deuxièmes points d'appui (20A) des articulations à trois axes (21 ; 22 ; 23) sont espacés les uns des autres d'un angle de roulis neutre (r1) par rapport à un axe de roulis (R), dans lequel l'axe de roulis (R) est perpendiculaire à un plan défini par les deuxièmes points d'appui (20A) et passe par un centre (M2) du deuxième cercle circonscrit (K2), et dans lequel le dispositif d'entraînement (41 ; 42 ; 43) respectif est actionné individuellement de telle sorte que le pivotement des éléments de liaison (31 ; 32 ; 33) autour de l'axe de rotation d'entraînement respectif (A) fait basculer la deuxième plate-forme (20) d'un angle d'inclinaison (n) par rapport à un axe central (Z) fixe par rapport à la première plate-forme (10) et la fait tourner autour de l'axe de roulis (R), dans lequel l'axe central (Z) est perpendiculaire à un plan défini par les premiers points d'appui (10A) et passe par un centre (M1) du premier cercle circonscrit (K1).

13. Procédé selon la revendication 12, dans lequel les dispositifs d'entraînement (41; 42 ; 43) sont chacun actionnés individuellement de telle sorte qu'un angle de roulis actuel (r2) par rapport à l'angle de roulis neutre (r1) est commandé en fonction de l'angle d'inclinaison (n).

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8215199 B2
- US 2006241810 A
- EP 188668 A
- US 5740699 A
- DE 10019162